# EUROPÄISCHE PATENTSCHRIFT

(11) **EP 0 575 723 B1**
(45) Veröffentlichungstag und Bekanntmachung des Hinweises auf die Patenterteilung: **21.08.1996**
(21) Anmeldenummer: 93106428.1
(22) Anmeldetag: 21.04.1993
(51) Int. Cl.: A47J 43/08, H02J 7/00

(54) **Haushaltsgerät zum Bearbeiten von Lebensmitteln**
Household appliance for the treatment of foodstuff
Appareil ménager à traiter des aliments

(30) Priorität: 20.06.1992 DE 4220233
(43) Veröffentlichungstag der Anmeldung: 29.12.1993
(73) Patentinhaber: Braun Aktiengesellschaft, 60326 Frankfurt am Main (DE)
(72) Erfinder: Penaranda Sanjuan, Mariano, E-08024 Barcelona (ES); Antolino, Jose Millan, Barcelona (ES); Hernandez Estarequi, Alejandro, Esplugues (ES); Safoni Olive, Vicente, Barna (ES); Torne Noya, Juan, Barcelona (ES)

(56) Entgegenhaltungen:
- EP-A- 0 341 395
- DE-B- 1 126 082
- DE-B- 1 221 919
- DE-B- 1 248 875
- FR-A- 1 554 399
- US-A- 3 525 912
- US-A- 3 710 224

## Beschreibung

Die Erfindung betrifft ein Haushaltsgerät zum Bearbeiten von Lebensmitteln, mit einem einen elektrischen Schalter und einen Elektromotor enthaltenden Grundgerät sowie elektrischen Verbindungsmitteln zum Anschluß an ein elektrisches Versorgungsnetz, wobei das Grundgerät zum einen zum netzunabhängigen Betrieb einen elektrischen Akkumulator enthält und zum anderen mit einem Netzteil verbindbar ist, wobei das Grundgerät eine elektrische Umschaltvorrichtung aufweist, die in einer ersten Schaltstellung die Verbindung des Elektromotors mit dem Akkumulator und in einer zweiten Schaltstellung die Verbindung des Elektromotors und des Akkumulators mit dem Netzteil ermöglicht.

Aus der US-PS 3,525,912 ist ein Gerät wie z.B. ein elektrischer Mixer bekannt, der sowohl mittels eines Akkumulators als auch mittels Netzbetriebes betreibbar ist. In Abhängigkeit davon, ob das Netzkabel in das Gerät eingebracht ist, wird dabei ein Schalter geöffnet oder geschlossen. Entsprechend der Stellung dieses Schalters wird dann bei geschlossenem Betriebsschalter des Gerätes ein Stromkreis des Motors entweder über den Akkumulator oder über das Netz geschlossen.

Weiterhin ist aus der EP 0 342 395 A1 ein Gerät, insbesondere ein Haarschneidegerät bekannt, bei dem ein Gerät über einen Akkumulator betreibbar ist. Dieses Gerät kann dann in ein Adapter eingebracht werden, so daß dann Netzanschlußleitungen kontaktiert werden. Es gibt hierbei keinen Umschalter zwischen Netz- und Akkumulatorbetrieb. Zum Betreiben des Gerätes wird dann der Betriebsschalter geschlossen. Mit diesem Betriebsschalter werden dann zwei Leitungen geschlossen. Die eine Leitung dient dabei der Energieversorgung des Motors beim Akkumulatorbetrieb, während die andere Leitung der Energieversorgung des Motors beim Netzbetrieb dient. Aber sowohl beim Akkumulator- als auch beim Netzbetrieb wird die jeweils andere Leitung ebenfalls geschlossen. Dadurch wird ein Ladestrombegrenzungswiderstand, der den Ladestrom des Akkumulators begrenzt, wenn das Gerät nicht betrieben wird, beim Betrieb des Gerätes kurzgeschlossen.

Weiterhin ist aus der DE-B-11 26 082 ein Haushaltsgerät bekannt, bei dem der Elektromotor über einen Schalter mit einem im Grundgerät des Haushaltsgerätes untergebrachten Akkumulator ver-bindbar oder über einen am Gehäuse angeordneten Steckanschluß, z.B. an den Akkumulator eines Autos oder über einen im Stromzuleitungskabel vorgesehenen Transformator an das öffentliche Stromnetz anschließbar ist. Soll das Haushaltsgerät nicht über die Akkumulatoren, sondern über das Stromnetz betrieben werden, so fließt der Strom bei eingeschaltetem Schalter über den Steckeranschluß und die Akkumulatoren zum Elektromotor. Dies führt zu dem Nachteil, daß, wenn beispielsweise keine Akkumulatoren eingelegt oder diese defekt sind, auch über den Netzbetrieb das Haushaltsgerät nicht eingeschaltet werden kann.

Weiterhin ist aus der DE-B-12 48 875 ein netzunabhängiges, elektromotorisch angetriebenes Haushaltsgerät bekannt, bei dem zur Ladung der im Haushaltsgerät angeordneten Akkumulatoren ein Wandhalter mit einer Ladestation vorgesehen ist, in den das Haushaltsgerät eingehängt werden muß. Bei dieser Anordnung kann das Haushaltsgerät ausschließlich nur über die Akkumulatoren betrieben werden, so daß bei leeren oder defekten Akkumulatoren keine Inbetriebnahme des Haushaltsgerätes möglich ist.

Will man beispielsweise ein Haushaltsgerät bauen, das mit einer höheren elektrischen Leistung versehen sein soll, so wird dieses aufgrund der größer dimensionierten Akkumulatoren schwerer und unhandlicher. Verändert man hingegen die Größe der Akkumulatoren nicht, so verkürzt sich ihre Betriebszeit zwischen zwei Aufladevorgängen.

Der Erfindung liegt daher die Aufgabe zugrunde, ein gattungsgemäßes Haushaltsgerät zu schaffen, welches bei der Handhabung als Netzgerät völlig unabhängig von den Akkumulatoren arbeitet und dabei dauerhaft eine hohe Leistung abgeben kann.

Erfindungsgemäß wird diese Aufgabe mit den kennzeichnenden Merkmalen des Anspruches gelöst. Durch diese Lösung wird ein Haushaltsgerät geschaffen, bei welchem für Aufgaben mit niedrigem elektrischen Leistungsbedarf, wie beispielsweise beim Quirlen und Schlagen, ein netzunabhängiger Betrieb ohne störendes Netzkabel möglich ist und bei welchem eine elektrische Verbindung zum Versorgungsnetz nur bei Funktionen mit hohem Leistungsbedarf nötig ist, wie beispielsweise beim Teigkneten. Bei dem erfindungsgemäßen Haushaltsgerät, das in der Praxis leicht zu handhaben ist, wird ein für eine Bedienungsperson funktionell eindeutiger Aufbau erreicht. So kann eine Bedienungsperson, wenn beispielsweise während des Betriebs des Haushaltsgeräts die Akkumulatoren erschöpft sind, durch einfaches Aufsetzen des Adapters das Haushaltsgerät mit Fremdenergie weiterbetreiben, ohne daß lange Aufladpausen erforderlich sind. Durch den Adapterkörper wird zusätzlich eine automatische und vor Fehlbedienungen sichere elektrische Betriebsweise garantiert, durch den die elektrische Umschaltvorrichtung betätigbar ist.

Im praktischen Betrieb ist bei den Funktionen mit niedrigem Leistungsbedarf keine Drehzahlregelung des Antriebes nötig, so daß es, wie es auch bei einer bevorzugten Ausführungsform der Erfindung vorgesehen ist, ausreicht, wenn das Netzteil eine Drehzahlregelung enthält. Durch die Anordnung der möglichen Drehzahlregelung im Netzteil bleibt das Grundgerät einfach aufgebaut, klein und handlich.

Eine besonders sichere Befestigung erhält man, wenn der Adapterkörper und das Grundgerät formschlüssig miteinander verbindbar sind, wobei es für die praktische Handhabung besonders günstig ist, wenn zur formschlüssigen Verbindung dieser beiden Teile eine vorgespannte Einrastvorrichtung vorgesehen ist, welche mittels einer Entriegelungsvorrichtung entsperrbar ist.

Eine für die Praxis wichtige Aufbewahrungsmöglichkeit für das Gesamtgerät wird dadurch geschaffen, daß das Gehäuse des Netzteiles eine Aufnahme für den Adapterkörper und das Grundgerät besitzt, wobei es in Bezug auf die Sicherheit gegen unbeabsichtigtes Lösen dieser Verbindung vorteilhaft ist, wenn eine einrastbare Verbindung zwischen dem Adapterkörper und dem Gehäuse des Netzteiles vorgesehen ist.

Eine für den praktischen Einsatz wichtige Einhand-Bedienungsmöglichkeit wird dadurch erreicht, daß die Widerstandskraft der einrastenden Verbindung in der Richtung wirksam ist, in welcher das Grundgerät von dem Adapterkörper entfernbar ist.

Uneingeschränkte Möglichkeiten bei der Wahl des Gerätestandortes stellt eine Ausführungsform der Erfindung sicher, bei welcher das Gehäuse des Netzteils als Wandhalterung ausgeführt ist.

Weitere vorteilhafte Merkmale sowie die Funktion der Erfindung ergeben sich aus der nachstehenden Beschreibung eines Ausführungsbeispiels der Erfindung als Stabmixer. Hierzu zeigen:
- Fign. 1 bis 3:: in stark vereinfachter Darstellungsweise unterschiedliche Betriebsarten des Gerätes,
- Fig. 4 :: das Grundgerät in perspektivischer Darstellung, allerdings ohne das Ende des Schaftes, an dem das Arbeitswerkzeug zum Bearbeiten der Nahrungsmittel ausgebildet ist, wobei die Umschaltvorrichtung ohne aufgesetzten Adapterkörper dargestellt ist,
- Fig. 5 :: den in der Umschaltvorrichtung integrierten Verriegelungsmechanismus, von oben her gemäß Fig. 4 auf das Grundgerät gesehen,
- Fign. 6 und 7:: zwei Ansichten des Adapterkörpers,
- Fig. 8 :: das Gehäuse des Netzteiles,
- Fig. 9 :: Ausschnitt des Einrastknopfes, der in Fig. 8 an der Unterseite der Ausnehmung ausgebildet ist und
- Fig. 10 :: eine Skizze der elektrischen Verschaltung.

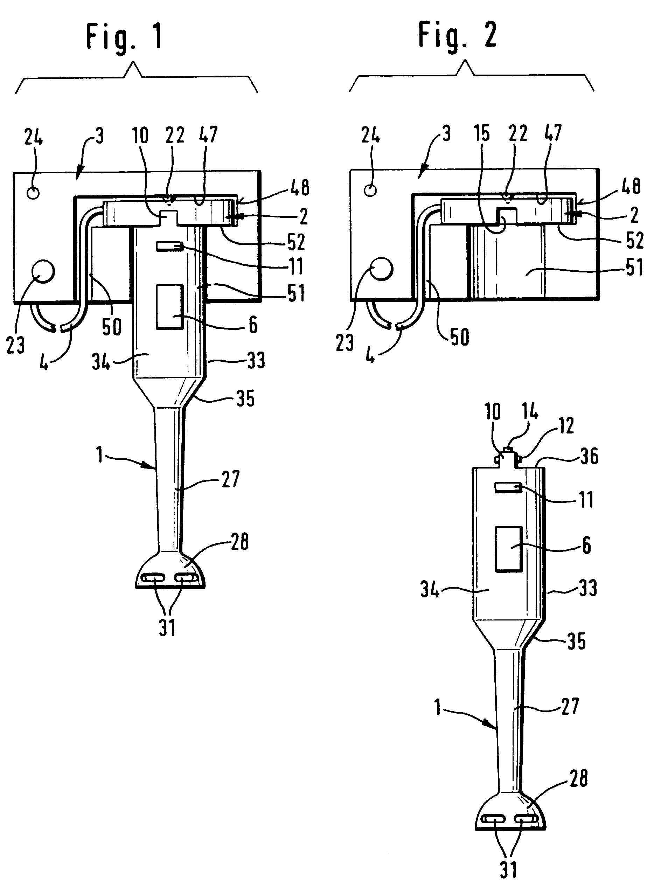

Fig. 1 zeigt einen vorzugsweise als Stabmixer ausgebildetes Grundgerät 1 im Aufbewahrungszustand. Das gesamte Haushaltsgerät setzt sich aus dem Grundgerät 1, einem mit diesem verbindbaren Adapterkörper 2 und einem als Wandhalter ausgeführten Netzteil 3 zusammen, wobei das Netzteil 3 durch das Kabel 4 mit dem Adapterkörper 2 und über diesen mit dem Grundgerät elektrisch verbunden ist.

In Fig. 2 ist die netzunabhängige Betriebsweise des Stabmixers 1 dargestellt. Hierzu wird das Grundgerät 1 auf später beschriebene Weise dem Adapterkörper 2 entnommen, wobei letzterer in der Wandhalterung verbleibt.

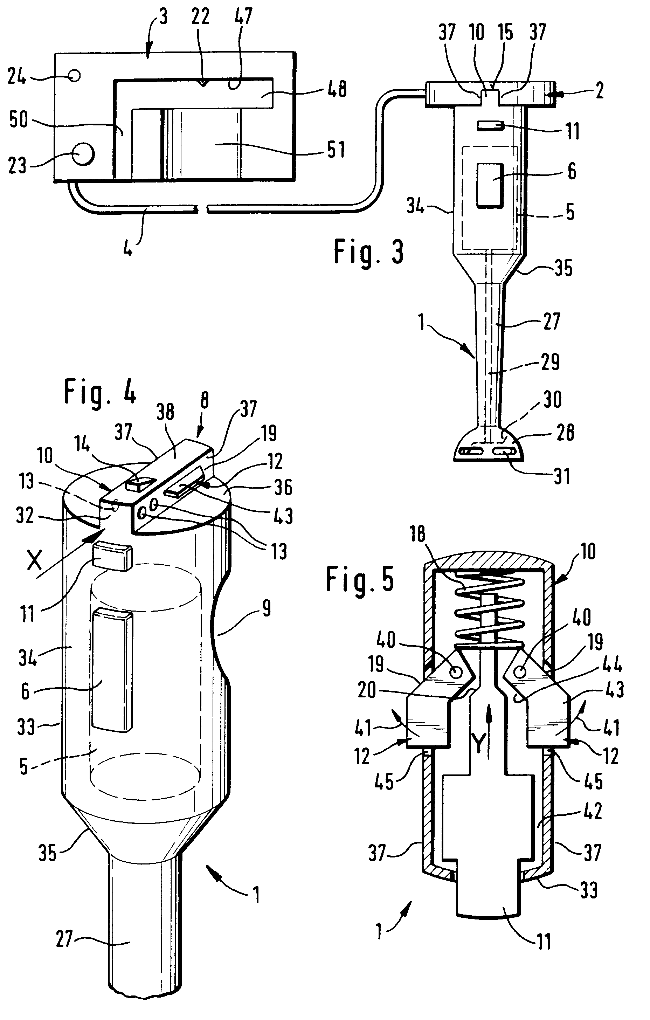

Fig. 3 zeigt die Betriebsweise des Stabmixers 1 als Netzgerät, wobei das Grundgerät 1 mit dem Adapterkörper 2 verbunden bleibt. Beide Geräte 1, 2 werden gemeinsam dem Wandhalter entnommen und das Grundgerät 1 wird über das Kabel 4 durch das elektrische Versorgungsnetz (nicht dargestellt) gespeist.

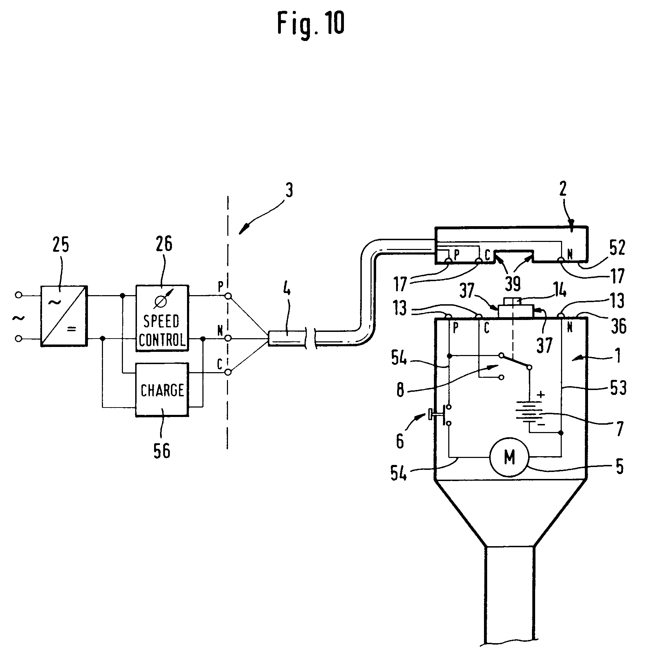

In Fig. 4 ist das Grundgerät 1 dargestellt, welches - wie dies auch Fig. 10 zu entnehmen ist - einen Elektromotor 5, einen Ein/Ausschalter 6, einen Akkumulator 7 (nur Fig. 10) und eine Umschaltvorrichtung 8 enthält. Das Gehäuse des Grundgerätes 1 ist nach Fig. 3 in an sich bekannter Weise als im wesentlichen zylindrischer Körper 34 mit Abstufungen 35, 36 ausgebildet, auf den sich nach unten ein zylindrischer Schaft 27 mit einer am Ende ausgebildeten, nach unten hin offenen Glocke 28 anschließt. In der Glocke 28 befindet sich ein Arbeitswerkzeug (Messer) 30, das über eine im Schaft 27 zentrierte Antriebswelle 29 mit dem Elektromotor 5 antriebsverbunden ist. Die Glocke 28 weist in etwa horizontal am Umfang verlaufende Schlitze 31 auf, die eine bessere Zirkulation der Nahrungsmittel beim Mischen oder Zerkleinern ermöglichen.

Dem Ein/Ausschalter 6 liegt nach Fig. 4 eine Griffmulde 9 diametral gegenüber. An der Abstufung 36 des Grundgerätekörpers 1 ist eine Leiste 10 ausgebildet, die sich, mittig angeordnet, diametral über den ganzen Durchmesser erstreckt und deren Stirnseite 32 mit der Mantelfläche 33 des Grundkörpers 34 fluchtet. Sowohl der Ein/Ausschalter 6 als auch die Entriegelungstaste 11 fluchten miteinander und stehen an der Mantelfläche 33 gleichermaßen hervor. Aus den Seitenwänden 37 der Leiste 10 ragt jeweils ein Rastriegel 12 heraus. Außerdem sind an diesen Seitenwänden 37 jeweils die elektrischen Kontakte 13 der drei Pole P, C und N (siehe Fig. 10) angedeutet. Auf der Oberseite 38 der Leiste 10 ragt die Betätigungstaste 14 rampenförmig heraus. Sie dient der Betätigung der Umschaltvorrichtung 8.

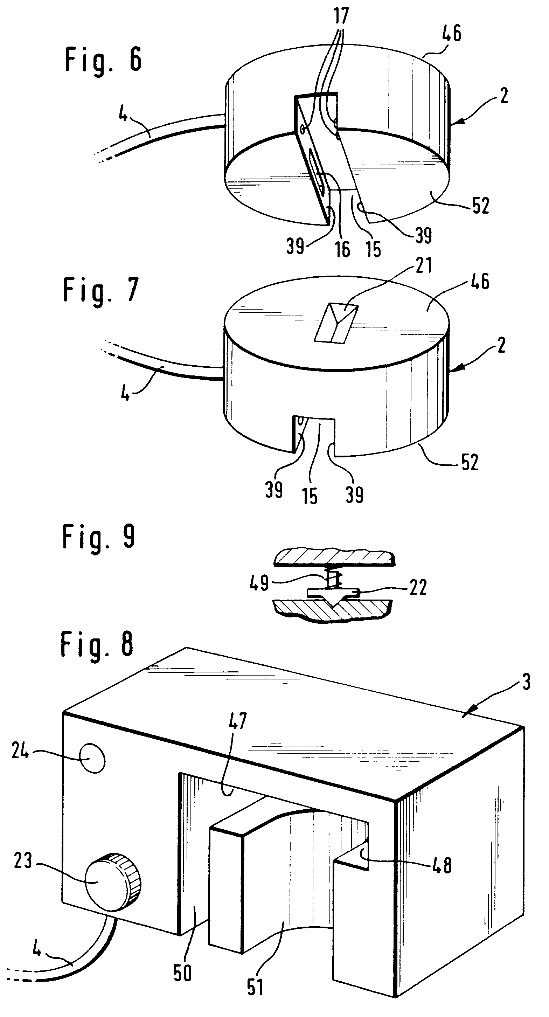

Die Betätigungstaste 14 nach Fig. 4 wird automatisch nach unten gedrückt, wenn die Leiste 10 in die entsprechende Nut 15 des in Fig. 6 dargestellten Adapterkörpers 2 eingeschoben wird. Die seitlichen Begrenzungswände 39 der Nut 15 sind nach Fig. 6 jeweils mit Ausnehmungen 16 versehen, in welche die Rastriegel 12 des Grundgerätes 1 eingreifen können. Außerdem sind an diesen Wänden 39 die Kontakte 17 ausgebildet, welche nach Verriegelung von Grundgerät 1 und Adapterkörper 2 miteinander in elektrischer Verbindung stehen.

Wie in Fig. 5 dargestellt, stehen die Rastriegel 12 unter Vorspannung der Feder 18, die sie um ihre jeweiligen Lagerbolzen 40 in dem Sinne beaufschlagt, daß ihre Verriegelungsabschnitte 43 sich aus der Leiste 10 in Pfeilrichtung 41 herausbewegen. Die Lagerbolzen 40 liegen senkrecht zur Einschubrichtung X (Fig. 4) des Grundgerätes 1, bzw. gemäß Fig. 5, also von oben her in den Innenraum des Adapterkörpers 2 gesehen, vor den Verriegelungsabschnitten 43, so daß sie sich während des Einschubvorganges über ihre schrägen Abschnitte 19 leicht entgegen der Kraft der Feder 18 nach innen in die Leiste 10 verschieben lassen.

Durch Verschiebung Y der Entriegelungstaste 11 lassen sich die Rastriegel 12 nach innen in den Innenraum 42 schwenken, so daß sie außer Eingriff mit den Ausnehmungen 16 (Fig. 6) gesetzt werden. Hierzu greift der konische Bereich 20 der Entriegelungstaste 11 beim nach innen in Richtung Y Drücken an den Schrägflächen 44 der Rastriegel 12 an. Nach ihrer Betätigung wird die Entriegelungstaste 11 durch die Feder 18 und die Rastriegel 12 wieder nach außen zurückgesetzt. Dabei gelangen auch die Verriegelungsabschnitte 43 wieder selbsttätig aus den Seitenwänden 37 der Öffnungen 45.

Wie in Fig. 7 zu erkennen ist, weist der kreisscheibenförmige Adapterkörper 2 auf seiner der Nut 15 gegenüberliegenden Stirnseite 46 eine zentrale keilförmige Vertiefung 21 auf. Wie in Fig. 9 angedeutet, dient die Vertiefung 21 dem Eingriff eines Einrastknopfes 22, der im Gehäuse des Netzteiles 3 an der Unterseite 47 der Ausnehmung 48 plaziert ist. Die Ausnehmung 48 dient zur Aufnahme des Adapterkörpers 2, wie dies die Figuren 1 und 2 deutlich zeigen. Dabei wird das Kabel 4 in dem Kanal 50 geführt. An die Ausnehmung 48 schließt sich nach den Figuren 1, 2, 3 und 8 der zylinderförmige Aufnahmeraum 51 an, der zur Aufnahme des Körpers 34 dient.

Der Einrastknopf 22 ist nach Fig. 9 durch eine Druckfeder 49 in Richtung Adapterkörper 2, d.h., in der Zeichnung nach unten vorgespannt. Fig. 8 zeigt außerdem den Drehknopf 23 zur Drehzahlregelung sowie eine Kontrolleuchte 24, welche beispielsweise der Ladekontrolle des Akkumulators 7 dienen kann.

Das Netzteil 3 beinhaltet, wie anhand von Fig. 10 näher erläutert werden kann, neben dem eigentlichen Netzgerät 25, welches die Netzwechselspannung in eine wesentlich niedrigere Gleichspannung umwandelt, eine Drehzahlregelung 26 sowie eine Schaltung 56, welche das Netzteil 3 auch als Ladegerät betreibbar macht. Die Schaltung 56 enthält eine Strombegrenzung und eine Entladeschutzdiode für den Akkumulator. Die beiden letztgenannten Elemente werden durch einen nicht dargestellten magnetisch betätigbaren Mikroschalter bei Akkumulatorbetrieb des Stabmixers 1 kurzgeschaltet. Bei geöffnetem Mikroschalter, also bei Betrieb des Stabmixers 1 als Netzgerät kann der Akkumulator auch dann geladen werden, wenn das Gerät 1 in Betrieb ist.

Im folgenden soll der elektrische Aufbau des Grundgerätes 1 anhand von Fig. 10 näher erläutert werden.

Der Kontakt 13 - in Fig. 10 werden die Kontakte 13 zur besseren Darstellung anstelle an den Seltenwänden 37, 39 an den Stirnflächen 36, 52, also in horizontal er Ebene, dargestellt, was durchaus auch denkbar ist - ist zum Anschluß an das 3-adrige Kabel 4 dreipolig mit den Einzelkontakten P, C und N ausgebildet. Der Kontakt N ist direkt über die Leitung 53, der Kontakt P unter Zwischenschaltung des Ein/Ausschalters 6 über die Leitung 54 mit dem Elektromotor 5 verbunden. N steht dabei für negativ, P für positiv und C für laden. An die Leitung 53 vom Kontakt N zum Elektromotor 5 ist der Minuspol des Akkumulators 7 angeschlossen. Der Pluspol des Akkumulators 7 ist bei unbetätigter Betätigungstaste 14 an die Leitung 54 zwischen dem Kontakt P und dem Ein/Ausschalter 6 angeschlossen.

Wenn die Betätigungstaste 14 durch die Verbindung des Grundgerätes 1 mit dem Adapterkörper 2 nach unten gedrückt wird (Fig. 1, 3), so schaltet die Umschaltvorrichtung 8 den Pluspol des Akkumulators 7 in Verbindung mit dem Kontakt C, so daß eine Aufladung des Akkumulators 7 möglich ist.

Wird, ausgehend von der in Fig. 1 dargestellten Ruhestellung, das Grundgerät 1 unter Betätigung der Entriegelungstaste 11 entnommen, so bleibt der Adapterkörper 2, wie in Fig. 2 dargestellt, aufgrund der Wirkung des Einrastknopfes 22 im Gehäuse des Netzteils 3. Die Betätigungstaste 14 springt aufgrund ihrer Vorspannung durch eine nicht dargestellte Feder nach oben und bringt die Umschaltvorrichtung 8 in die in Fig. 10 dargestellte Stellung, so daß der Akkumulator 7 mit dem Ein/Ausschalter 6 verbunden ist.

Somit ist eine netzunabhängige Betriebsweise des Stabmixers 1 gegeben, bei der jedoch eine Regelung der Drehzahl über das Netzteil 3 nicht möglich ist, allerdings dann jedoch, wenn der Stabmixer zusätzlich noch eine eigene eingebaute Regelung aufweist.

Wird der Adapterkörper 2 nun mit dem Grundgerät 1 verriegelt oder wird, ausgehend von der Ruhestellung, das Grundgerät 1 mit dem Adapterkörper 2 entnommen, ohne daß die Entriegelungstaste 11 betätigt wird, so bleibt durch die Betätigungstaste 14 bzw. durch die Umschaltvorrichtung 8 der Akkumulator 7 vom Ein/Ausschalter 6 getrennt und es ist durch die Umschaltvorrichtung 8 der Akkumulator 7 mit der Ladeleitung C verbunden. Da in diesem Zustand die Kontakte 13 und 17 miteinander in Verbindung stehen, kann so zum einen der Akkumulator geladen werden; zum anderen ist nun ein Netzbetrieb des Grundgerätes 1 möglich, so daß bei Bedarf die Betriebsdrehzahl über die Drehzahlregelung 26 mittels des Drehknopfes 23 variiert werden kann.

Die elektrische Umschaltung Innerhalb des Grundgerätes 1 erfolgt automatisch durch Verbinden oder Lösen desselben mit dem Adapterkörper 2. Auf diese Weise sind Fehlbedienungen nicht möglich. Zumal die Betätigungstaste 14 bei Netzbetrieb von außen nicht zugänglich ist. Während des Akkumulatorbetriebes des Stabmixers kann durch versehentliches Herunterdrücken der Betätigungstaste 14 lediglich das Gerät ausgeschaltet werden.

## Patentansprüche

1. Haushaltsgerät zum Bearbeiten von Lebensmitteln, mit einem einen elektrischen Schalter (6) und einen Elektromotor (5) enthaltenden Grundgerät (1) sowie elektrischen Verbindungsmitteln (4) zum Anschluß an ein elektrisches Versorgungsnetz, wobei das Grundgerät (1) zum einen zum netzunabhängigen Betrieb einen elektrischen Akkumulator (7) enthält und zum anderen mit einem Netzteil (3) verbindbar ist, wobei das Grundgerät (1) eine elektrische Umschaltvorrichtung (8,14) aufweist, die in einer ersten Schaltstellung die Verbindung des Elektromotors (5) mit dem Akkumulator (7) und in einer zweiten Schaltstellung die Verbindung des Elektromotors (5) und des Akkumulators (7) mit dem Netzteil (3) ermöglicht,
dadurch gekennzeichnet,
daß das Netzteil (3) mittels einer elektrischen Leitung (4) an einen Adapterkörper (2) angeschlossen ist, der mit dem Grundgerät (1) mechanisch verbindbar ist und daß durch die mechanische Verbindung von Grundgerät (1) und Adapterkörper (2) auch die elektrische Umschaltvorrichtung in ihre zweite Schaltstellung gebracht wird und mit einer Schaltung (56) die bei Betrieb des Grundgeräts (1) als Netzgerät den Ladestrom des Akkumulators (7) begrenzt.

2. Haushaltsgerät nach Anspruch 1,
**dadurch gekennzeichnet,**
daß das Netzteil (3) eine Drehzahlregelvorrichtung (26) enthält.

3. Haushaltsgerät nach Anspruch 1,
**dadurch gekennzeichnet,**
daß der Adapterkörper (2) und das Grundgerät (1) formschlüssig miteinander verbindbar sind.

4. Haushaltsgerät nach Anspruch 3,
**dadurch gekennzeichnet,**
daß zur formschlüssigen Verbindung zwischen Adapterkörper (2) und Grundgerät (1) eine vorgespannte Rastvorrichtung (12, 18) vorgesehen ist, welche mittels einer Entriegelungsvorrichtung (11, 20) entsperrbar ist.

5. Haushaltsgerät nach Anspruch 1,
**dadurch gekennzeichnet,**
daß das Gehäuse des Netzteils (3) eine Aufnahme (48, 51) für den Adapterkörper (2) besitzt.

6. Haushaltsgerät nach Anspruch 5,
**dadurch gekennzeichnet,**
daß eine einrastbare Verbindung (21, 22) zwischen dem Adapterkörper (2) und dem Gehäuse des Netzteils (3) vorgesehen ist.

7. Haushaltsgerät nach Anspruch 6,
**dadurch gekennzeichnet**,
daß die Widerstandskraft der einrastenden Verbindung (21, 22) in der Richtung wirksam ist, in welcher das Grundgerät (1) von dem Adapterkörper (2) entfernbar ist.

8. Haushaltsgerät nach Anspruch 7,
**dadurch gekennzeichnet,**
daß das Gehäuse des Netzteils (3) als Wandhalterung ausgeführt ist.

## Claims

1. A domestic appliance for processing foods, with a basic device (1) accommodating an electric switch (6) and an electric motor (5), as well as electrical connecting means (4) for connection to an electrical power supply, with the basic device (1) including an electric accumulator (7) for operation independently of the line, in addition to being adapted to be connected to a power pack (3), in which the basic device (1) includes an electric switching arrangement (8, 14) which, in a first switching position, provides for connection of the electric motor (5) to the accumulator (7) and which, in a second switching position, provides for connection of the electric motor (5) and the accumulator (7) to the power pack (3),
**characterized in that** an electric line cord (4) connects the power pack (3) to an adapter body (2) adapted to be mechanically connected with the basic device (1), and that the mechanical connection between the basic device (1) and the adapter body (2) also causes the electric switching arrangement to be brought into its second switching position, and with a circuitry (56) which, in operation of the basic device (1) in the line mode, limits the charging current of the accumulator (7).

2. The domestic appliance as claimed in claim 1, **characterized in that** the power pack (3) includes a speed control device (26).

3. The domestic appliance as claimed in claim 1, **characterized in that** the adapter body (2) and the basic device (1) are adapted to be in positive engagement with each other.

4. The domestic appliance as claimed in claim 3, **characterized in that** the means providing positive engagement between the adapter body (2) and the basic device (1) is a biased locking device (12, 18) releasable by means of a release latch device (11, 20).

5. The domestic appliance as claimed in claim 1, **characterized in that** the housing of the power pack (3) includes a receptacle (48, 51) for the adapter body (2).

6. The domestic appliance as claimed in claim 5, **characterized in that** a lock-down connection (21, 22) is provided between the adapter body (2) and the housing of the power pack (3).

7. The domestic appliance as claimed in claim 6, **characterized in that** the resisting force of the lock-down connection (21, 22) acts in the direction in which the basic device (1) is removable from the adapter body (2).

8. The domestic appliance as claimed in claim 7, **characterized in that** the housing of the power pack (3) is adapted for wall mounting.

## Revendications

1. Appareil ménager pour le traitement de denrées alimentaires, comprenant un appareil de base (1) contenant un commutateur (6) électrique et un moteur électrique (5) ainsi que des moyens de raccordement électriques (4) à un réseau d'alimentation électrique, l'appareil de base (1) contenant d'une part un accumulateur (7) électrique pour fonctionner sans dépendre du réseau et étant d'autre part susceptible d'être raccordé à un élément de secteur (3), l'appareil de base (1) présentant un dispositif de commutation (8, 14) électrique qui permet dans une première position de commutation la liaison du moteur électrique (5) à l'accumulateur (7) et dans une seconde position la liaison du moteur électrique (5) et de l'accumulateur (7) à l'élément de secteur, caractérisé en ce que l'élément de secteur (3) est branché au moyen d'une ligne (4) électrique à un corps adaptateur (2) qui est susceptible d'être relié mécaniquement à l'appareil de base (1) et en ce que grâce à la liaison mécanique de l'appareil de base (1) et du corps adaptateur (2), le dispositif de commutation électrique est aussi mis dans sa seconde position de commutation, et comprenant un circuit (56) qui limite le courant de charge de l'accumulateur (7) lorsque l'appareil de base (1) fait office d'appareil sur secteur.

2. Appareil ménager selon la revendication 1, caractérisé en ce que l'élément de secteur (3) contient un dispositif de réglage de la vitesse de rotation (26).

3. Appareil ménager selon la revendication 1, caractérisé en ce que le corps adaptateur (2) et l'appareil de base (1) sont susceptibles d'être reliés l'un à l'autre par coopération de formes.

4. Appareil ménager selon la revendication 3, caractérisé en ce que pour relier par coopération de formes le corps adaptateur (2) à l'appareil de base (1), il est prévu un dispositif d'enclenchement (12, 18) précontraint qui est susceptible d'être déverrouillé au moyen d'un dispositif de déverrouillage (11, 20).

5. Appareil ménager selon la revendication 1, caractérisé en ce que le boîtier de l'élément de secteur (3) possède un logement de réception (48, 51) pour le corps adaptateur (2).

6. Appareil ménager selon la revendication 5, caractérisé en ce qu'il est prévu une liaison (21, 22) par encliquetage entre le corps adaptateur (2) et le boîtier de l'élément de secteur (3).

7. Appareil ménager selon la revendication 6, caractérisé en ce que la force de résistance de la liaison par encliquetage (21, 22) agit dans la direction dans laquelle l'appareil de base (1) peut être enlevé du corps adaptateur (2).

8. Appareil ménager selon la revendication 7, caractérisé en ce que le boîtier de l'élément de secteur (3) est réalisé sous forme de support mural.
